# EUROPEAN PATENT APPLICATION

(11) **EP 3 487 204 A1**
(43) Date of publication of application: **22.05.2019**
(21) Application number: 18206572.2
(22) Date of filing: 15.11.2018
(51) Int. Cl.: H04W 24/00

(54) **EARLY MEASUREMENT REPORTING FOR CELL ACCESS**

(30) Priority: 16.11.2017 US 201762587141 P
(71) Applicant: Nokia Technologies Oy, 02610 Espoo (FI)
(72) Inventor: VIRTEJ, Elena, 02100 Espoo (FI); DALSGAARD, Lars, 90230 Oulu (FI); HENTTONEN, Tero, 02320 Espoo (FI); PETTERI LUNDEN, Jari, 02320 Espoo (FI)
(74) Representative: Nokia EPO representatives

(57) **Abstract**

Various communication systems may benefit from improved secondary cell access. For example, faster secondary cell access may be help to improve the transition time of a user equipment from an idle or inactive state to a connected state. A method may include triggering new traffic at a user equipment, wherein the user equipment is in an idle state or an inactive state. The method may also include performing measurements at the user equipment to find another cell on a carrier after receiving new traffic. In addition, the method may include transmitting an early measurement report comprising the measurements from the user equipment to the network entity. The early measurement report is transmitted before the termination of a measurement period.

## Description

### BACKGROUND:

### Field:

Various communication systems may benefit from improved cell access. For example, faster cell access may be help to improve the transition time of a user equipment from an idle or inactive state to a connected state.

### Description of the Related Art:

Third generation partnership project (3GPP) technology, such as Long Term Evolution (LTE), allows a user equipment to utilize a carrier aggregation (CA) mode or a dual connectivity (DC) mode. In a CA mode or a DC mode, the user equipment can be connected to both a primary cell, for example a macro cell, and one or more secondary cells, for example, one or more small cells, at the same time, but on separate carrier frequencies. When a user equipment transitions into an idle state or an inactive state, the user equipment drops the CA or DC connections, and saves power by stopping the monitoring of multiple carriers. If and when the user equipment transitions back to an active mode or a connected mode, the user equipment has to be reconfigured with CA or DC connections, which requires both time and resources.

3GPP New Radio (NR) technology or 5^{th} Generation (5G) technology utilizes a Non-Stand-Alone (NSA) operation. NSA Evolved Universal Mobile Telecommunications System (UMTS) Terrestrial Radio Access (E-UTRAN) allows for a DC mode with a user equipment connection with both the LTE primary cell (PCell) and the NR Primary secondary cell (PScell). Such DC operation in NSA E-UTRAN and NR may experience similar setup delays as the LTE DC, when the user equipment transitions from an idle or inactive state to an active state.

### BRIEF DESCRIPTION OF THE DRAWINGS:

For proper understanding of the invention, reference should be made to the accompanying drawings, wherein:
Figure 1 illustrates an example of a chart of user equipment power consumption according to certain embodiments.
Figure 2 illustrates an example of a signal flow diagram according to certain embodiments.
Figure 3 illustrates an example of a measurement report according to certain embodiments.
Figure 4 illustrates an example of a measurement report according to certain embodiments.
Figure 5 illustrates an example of a measurement report according to certain embodiments.
Figure 6 illustrates an example of measurement results according to certain embodiments.
Figure 7 illustrates an example of a measurement report according to certain embodiments.
Figure 8 illustrates an example of measurement results according to certain embodiments.
Figure 9 illustrates an example of a flow diagram according to certain embodiments.
Figure 10 illustrates an example of a flow diagram according to certain embodiments.
Figure 11 illustrates an example of a system according to certain embodiments.

### SUMMARY

In a first aspect thereof the exemplary embodiments of this invention provide a method that comprises triggering new traffic at a user equipment, wherein the user equipment is in an idle state or an inactive state; performing measurements at the user equipment to find another cell on a carrier after the triggering of the new traffic; and transmitting an early measurement report comprising the measurements from the user equipment to a network entity during or after a connection setup procedure.

In a further aspect thereof the exemplary embodiments of this invention provide an apparatus that comprises triggering means for triggering new traffic at a user equipment, wherein the user equipment is in an idle state or an inactive state; performing means for performing measurements at the user equipment to find another cell on a carrier after the triggering of the new traffic; and transmitting means for transmitting an early measurement report comprising the measurements from the user equipment to a network entity during or after a connection setup procedure.

In another aspect thereof the exemplary embodiments of this invention provide an apparatus that comprises receiving means for receiving, at a network entity, an early measurement report from a user equipment wherein the early measurement report comprises measurements of another cell by the user equipment on a carrier and the early measurement report is received during or after a connection setup procedure.

In yet another aspect thereof the exemplary embodiments of this invention provide a method that comprises receiving, at a network entity, an early measurement report from a user equipment wherein the early measurement report comprises measurements of another cell by the user equipment on a carrier and the early measurement report is received during or after a connection setup procedure.

### DETAILED DESCRIPTION:

In certain embodiments, some additional user equipment measurements in the idle mode or the inactive mode may be added to assist a network entity, such as an evolved NodeB (eNB) or a 5G or NR NB (gNB), in CA and/or DC setup when the user equipment transitions back to a connected or active mode. The additional user equipment measurements can allow for faster small cell setup and utilization during a connection establishment or when activating or resuming a connection. Unlike measurement reports transmitted by a user equipment in a connected mode, measurement reports transmitted by the user equipment in an inactive mode or an idle mode may include old or obsolete measurements. Whether or not measurements are old or obsolete may depend on several factors, such as whether and how fast the user equipment was moving. The user equipment movement information, however, may be difficult to convey to the network.

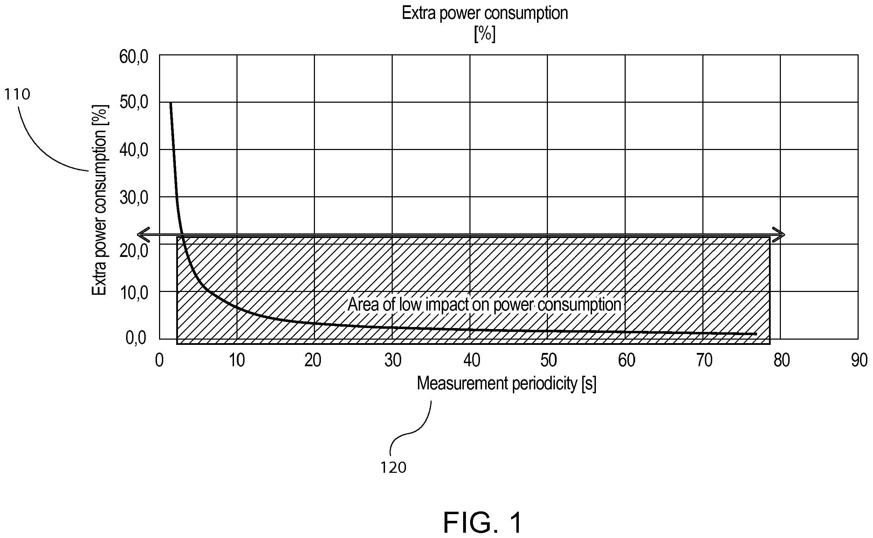

Some embodiments may help to achieve a balance between the amount of assistance measurements performed by the user equipment and the amount of power consumed by the user equipment, especially in those embodiments in which the user equipment is in an idle or inactive mode. Figure 1 illustrates a chart of user equipment power consumption according to certain embodiments. Specifically, Figure 1 illustrates a percentage of extra power consumption 110 expected at a user equipment in idle mode due to inter-frequency measurements for another cell based on the measurement periodicity 120, which may be measured in seconds. The another cell, for example, may be a secondary cell, a primary secondary cell, a small cell, a wireless local area network (WLAN) access point (AP), or any other type of cell or entity that allows data transmission and reception for users.

For example, as shown in Figure 1, when the measurement periodicity is 1.28 seconds, which is also the length of the LTE paging cycle in this example, the user equipment power consumption may be increased by 50%. The longer the measurement periodicity, also known as the inter-frequency secondary cell measurement cycle, the lower the percentage of extra power consumption at the user equipment. As shown in Figure 1, according to certain embodiments, the power consumption may increase as much as 50%. The user equipment in certain embodiments may be capable of measuring both the serving cell and the inter-frequency carrier at the same time. The measurements of the inter-frequency carrier can lead to increased power consumption at the user equipment.

Shortening the transition of the user equipment from the inactive or idle mode to a connected or active mode can help to decrease the extra power consumption of the user equipment illustrated in Figure 1. Certain embodiments may therefore configure the user equipment measurement reporting to help speed up the reaction time after the connection setup of the user equipment. A similar challenge may be presented in a NSA system in which a multi-radio access technology DC (MR-DC), including a Master Node (MN) belonging to a first RAT and a Secondary Node (SN) belonging to a second RAT. In such a system, the configuration latency may depend on how fast the user equipment is able to report potential second RAT secondary or primary secondary cells to the first RAT primary cell, also referred to as a mobile node or network entity. MN may not be able to configure MR-DC before second RAT cells have been reported to the primary cell, which may result in longer setup delays in the MR-DC configuration impacting the practical usage of the second RAT cells. One specific example of MR-DC is the E-UTRAN NR DC (EN-DC), where the first RAT is E-UTRAN, with the MN being an LTE cell, and the second RAT is next generation radio access network (NG-RAN) with the SN being a NR cell.

Speeding up the transitioning of the user equipment from the idle or inactive mode to the active mode with a configured MR-DC, EN-DC, CA, and/oror DC, however, may not always be possible. For example, the user equipment may be power limited. Active mode with a configured MR-DC, EN-DC, CA, and/or DC, may simply be referred to as an active mode below. In certain embodiments, the MR-DC may be an NR-LTE DC, LTE-WLAN DC, NR-WLAN DC, and/or NR-NR DC. In another example, the user equipment may not be able to perform a usable secondary cell measurement, for example a small cell measurement, before the radio resource control connection is established or resumed. Speeding up the CA or DC setup between the user equipment and the primary cell and another cell, such as a secondary cell, would be desirable even before a fully accurate measurement may be performed by the user equipment.

In another example, certain embodiments may be used for faster triggering of inter-frequency handovers. The handover, in one example, may be a hard handover, rather than a multi-cell connectivity handover such as CA or DC. In other words, some embodiments may be used in a more general faster access scheme.

Certain embodiments have been described using terms related to LTE merely for exemplary purposes. As mentioned throughout, other embodiments may use any other type of 3GPP or non-3GPP technology, such as non-stand alone NR (NSA) and/or EN-DC, as well as any other type of past, present, or future technology.

Certain embodiments, therefore, may allow the user equipment to utilize a multi-level measurement reporting for inter-frequency or inter radio access technology (RAT) cells. The multi-level measurement reporting, which may simply be referred to as measurement reporting hereinafter, may be performed after triggering new traffic at a user equipment or by the network. Multi-level measurement reporting means that the user equipment may transmit early measurement reports. Reports may be sent until a threshold is met or until a termination of a measurement period, at which point the user equipment may revert back to traditional or legacy measurement reporting.

As discussed above, the early measurement reporting may be triggered by the new traffic at the user equipment. New traffic, for example, may be traffic arriving at a buffer of the user equipment for a mobile originating call and/or a paging indication for a mobile terminating call. In some embodiments, the user equipment may be triggered to periodically provide one or more early measurement reports or fast measurement results to a network entity, even before any secondary cell has been measured. The user equipment may be allowed to provide a first measurement report very fast, for example, before the user equipment received any dedicated measurement configuration from the network entity. In certain embodiments, the dedicated measurement configuration may be received by the user equipment via a radio resource control (RRC) channel.

In some embodiments, the user equipment may be configured to periodically provide one or more early measurement reports or fast measurement results to a network entity, where the configuration is given before any cell has been measured on the corresponding carrier. The early measurement reporting may also start before any cells have been yet detected or measured.

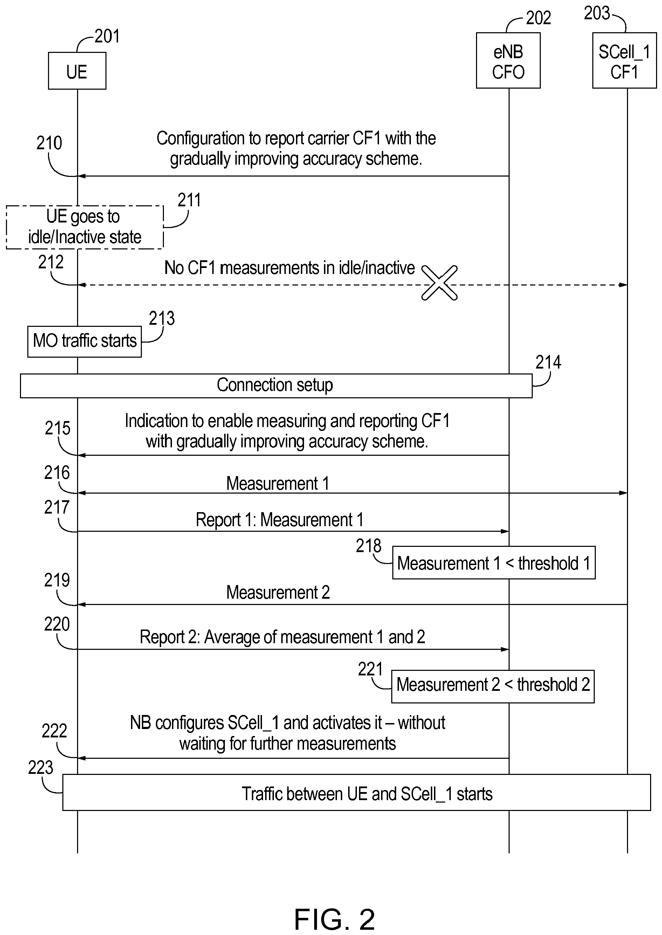

Figure 2 illustrates an example of a signal flow diagram according to certain embodiments. In particular, Figure 2 illustrates an example of an embodiment of multi-level measurement reporting that may gradually improve in the accuracy of the measurements. In step 210, a user equipment (UE) 201 may receive a configuration from a network entity 202, such as an evolved NodeB (eNB), to perform and report measurements in a first carrier frequency (CF1) with gradually improving accuracy. CF1 may be a carrier frequency associated with a PSCell or secondary cell (SCell) 203, which may be a small cell, while eNB 202 may associated with a different carrier frequency (CF0). PSCell or SCell 203, for example, may be an eNB or a gNB. In other words, in step 210, the user equipment is configured by the network entity to transmit an early measurement report to the network entity, in order to help set up a DC or CA connection between UE 201 and both eNB 202 and PSCell and/or SCell 203.

In certain embodiments, measurements may be performed on carriers which the network has indicated and/or which the user equipment is able to use for the CA and/or the DC. In embodiments that utilize EN-DC, when the NR carriers are in higher carrier frequencies, the UE may have a separate radio frequency chain for NR. In certain embodiments, the NR measurements may be performed in parallel with the connection setup, thereby significantly reducing the setup time for EN-DC, and improve the NR usage time.

In step 211, the user equipment may enter an idle state or an inactive state, which may also be referred to as an idle mode or an inactive mode. While in an idle state or an inactive state, UE 201 does not make any measurements or regular measurements on the first carrier frequency and/or the different carrier frequency, as shown in step 212. In step 213, UE 201 may trigger new traffic while still in an idle state or an inactive state. The new traffic, for example, may be traffic arriving at a buffer of the user equipment for a mobile originating call and/or a paging indication for mobile terminating calls. Once the new traffic is triggered, or the mobile originating traffic starts as shown in step 213, a connection setup may be initiated between UE 201 and network entity 202, as shown in step 214. The connection setup may also include a DC mode or a CA mode connection setup with both eNB 202 and PSCell or SCell 203.

In step 215, UE 201 may receive an indication to enable or allow the performing and reporting of measurements on CF1 with a gradually improving accuracy scheme. A gradually improving scheme may mean that each successive measurement report may increase in accuracy. For example, if two measurement reports are sent from the UE, the second measurement report has a higher accuracy than the first measurement report. Upon triggering the mobile originating or mobile terminating call, the UE may perform inter-frequency and/or inter-RAT measurements to find secondary cells, or any other cells, on one or more specific carriers, such as CF1. The frequency of the one or more specific carriers may be related to different RATs, such as LTE technology or NR technology.

In certain embodiments, UE 201 may receive an indication of the carrier on which to perform measurements. For example, the carrier may be indicated to the UE via a system information block (SIB). The SIB may be an SIB number 5, which may be used for inter-frequency measurements. In another embodiment, an indication of the carrier on which UE 201 may perform measurements may be received via a paging indication or any other type of message. The paging indication or message may include a trigger for providing an early measurement report. In certain embodiments, the carrier on which UE 201 may perform measurements may be transmitted to the user equipment via the RRCConnectionSetup message, Msg4, and/or any other message sent during or in connection to the RRC connection setup. The RRCConnectionSetup, Msg4, and/or any other message sent during or in connection to the RRC connection setup, may be the first message sent from network entity 202 to UE 201 after the user equipment enters the connected state. The above carrier information received at the user equipment may be part of a measurement configuration performed by the network.

In yet another embodiment, the carrier information may be configured at the UE during an RRC connection release. When indicating the measurement configuration via the RRC connection release, additional information may be given to the UE, compared to using other broadcast indications, such as a paging indication. For example, the user equipment may be asked to store the current CA, DC, or EN-DC configuration and primarily measure those cells, with the expectation that the UE will likely return to an active state, while still operating under the same cell. Such a UE may be known as a semi-stationary user equipment.

Once the UE initiates the performance of measurements, the UE may apply specific measurements, requirements, and/or reporting rules that differ from traditional reporting. The measurement rules, for example, may state that the UE should search for the strongest cells in certain carriers on the same or different RATs, and report the results according to a specific measurement reporting scheme, which may include the use of early measurement reporting and/or thresholds.

User equipment 201 may perform or initiate a measurement 1, as shown in step 216, after the triggering of the new traffic in step 213, and transmit a measurement report including measurement 1 to network entity 202. In certain embodiments, the UE may periodically report the measurements to the network entity using measurement reports. For example, a measurement report may periodically be transmitted every 40 milliseconds (ms) or every x*10 ms, with x being an integer above zero. The periodicity of providing the measurement report may be implicitly and/or explicitly determined by the UE and/or the network entity, such as eNB 202.

In certain embodiments, the reporting may periodically continue until the termination of a measurement period. The measurement period may terminate at a time at which the measurement report may be deemed reliable by either the UE or the network. The measurement period, for example, may be 200 ms for intra-frequency measurements and/or 480 ms per inter-frequency measurements or inter-RAT measurements. In certain embodiments, the measurement period may scale with frequency layers, meaning that the measurement period may be 480 ms x N number of layers, in which 480 ms may be used if only one carrier is measured. In other words, the measurement period may differ based on the type of measurements performed by the UE. In some embodiments, the termination of the measurement period may correspond to a layer 1 (LI) filtering period.

In certain embodiments, this reporting may continue for a given period of time, for example, until a user equipment has enough samples to report more reliable one or more measurements. This given period of time may be a full measurement period, for example.

In some embodiments, the number of measurement samples to be reported may also be indicated to the user equipment within the measurement configuration. In such embodiments, after the indicated number of samples or measurements is reported, the UE may fall back to applying the regular measurement configuration.

In certain embodiments, the measurement period may be configured by the network entity and received via an SIB, paging indication, an RRCConnectionSetup message, or an RRC Connection Release message. The network may configure the measurement period of the UE, and how often the reporting of the measurements may occur. In other embodiments, the measurement period may be a default or a common period of time. In other embodiments, in addition to or as an alternative to the measurement period, the number of measurement samples may also be indicated to the UE within the measurement configuration. The number of samples may be either explicitly indicated, as a numerical value, or implicitly indicated for example, using a fixed time that provides the UE a measurement period and the periodicity of the measurement reporting, and/or until UE sends a specified signal to network, for example a random access signal, a buffer status report, or a scheduling request.

In some embodiments, the accuracy of the early measurement reports transmitted from the UE before the termination of a measurement period may be lower than a traditional measurement report sent after the termination of the measurement period. In certain embodiments, therefore, the early measurement reports may include information related to the accuracy of the results included in the measurement report. The accuracy may be based on the number of samples on which the measurement results included in a measurement report are based. There may be separate accuracies included for different reported cells in a report. The accuracy may depend on the number of measurement samples.

In some embodiments, for example, the initial measurement reporting, as shown in step 217 in Figure 2, may indicate that it is based on a single sample, meaning that the UE only performed one measurement. The network entity receiving the initial early measurement reporting may be aware that the accuracy of the measurement report may be lower than in traditional or legacy measurement reports.

In step 219, UE 201 may take additional measurements of secondary cell 203 in CF1, and may then send an additional measurement report, as shown in step 220. The additional measurement report transmitted to the network in step 220 may be based on both the initial measurements in step 216 and the second measurements performed by UE 201 in step 219. In certain embodiments, the measurement report transmitted in step 220 may average the two previous measurements taken in step 216 and 220. The early measurement report transmitted in step 220 may include an indication that the measurements included in the early measurement report are based on two samples or two sets of measurements. This indication may inform the network that the accuracy of the additional early measurement report transmitted in step 220 is higher than the early measurement report transmitted initially in step 217.

Having early measurement reporting, in certain embodiments, may ensure that the network entity gets measurement result information faster, during an early phase of the connection setup. This is helpful, for example, in embodiments in which the UE had not been measuring cells on the carrier before-hand, so that there would be a longer delay until a first measurement result is reported, when a regular measurement period is applied. Based on the received early measurement report and/or the accuracy indication included in the measurement report, the network entity may configure a cell as a primary cell, and a small cell as a primary secondary cell or secondary cell to be used in CA or DC. Configuring the secondary cell early may be performed when the measurements included in the early measurement reports are good enough, even when considering the relative higher uncertainty of the early measurement report.

In certain embodiments, the measurement report may be omitted if the measurements included in the measurement report do not meet a certain threshold. In other words, the user equipment may provide the early measurement report only when a certain threshold may be met. In some other embodiments, the user equipment may provide the measurement report to the network entity even when the threshold is not met to ensure that the network entity does not consider the measurement report to have been lost. Upon receiving at the network entity, the measurement report may not consider the measurements in the report if the measurements do not meet a certain threshold. The one or more thresholds may be adjusted based on a number of measurements performed by the user equipment. In other words, the threshold may be adjusted based on the accuracy indication included in the measurement report. In some embodiments, the network entity may receive the sequence of measurement samples from the UE in order to get more information on the small cell quality, for example.

In some embodiments, the one or more threshold may be configurable within the reporting that triggers the UE behavior. In certain embodiments, the UE may report that no cells meeting the requirements were found, without measurement results, to ensure that the network entity, such as an eNB, does not consider the measurement reports having been lost.

In some other embodiments, the reporting may be configured at the connection setup by the network. For example, in LTE a Msg4 or a RRCConnectionSetup may be used. In another example, a paging message may be used, for example, a one bit indication within the paging message when the network has the UE context and knows that the UE supports the procedure. In certain embodiments, the reporting may be configured before the connection release or connection suspension. In another embodiments, the reporting may be configured in the system information, and then enabled or activated during a connection setup procedure.

As shown in Figure 2, for example, the network may have two different thresholds. The measurements included in the early measurement report transmitted to the network in step 217, may have a lower accuracy than the first threshold, as shown in step 218. On the other hand, the measurements included in the early measurement report transmitted to the network in step 220, may have a higher accuracy than the second threshold, as shown in step 221. Once the threshold is met in step 221, the network entity may configure the secondary cell and activates the SCell if needed, at the user equipment, as shown in step 222, based on the early measurement reports, without having to wait for further measurements. In other words, in step 222, the UE transitions from the idle state or the inactive state to an active state of the UE. Traffic may then be received and/or transmitted between UE 201, eNB 202, and Scell and/or PSCell 203.

As discussed above, the frequency carrier, referred to merely as carrier herein, measurement period, and/or threshold, may be configured at the user equipment during the connection setup by the network, using for example an RRCConnectionSetup or an Msg4. The user equipment may also be configured via a paging message, using for example one bit within the paging information addressed to a UE, when the network is informed of the user equipment context and/or knows that the user equipment supports certain procedures. In some embodiments, the paging message may be intended for multiple UEs, and can include multiple paging records of which only one may be meant for a particular UE. In other embodiments, the user equipment may be configured before or in connection with the connection release or suspension, and then enabled or activated during a connection setup procedure.

In some embodiments, therefore, the user equipment may send an early measurement report and may be transmitted, for example, before the termination of a measurement period. The user equipment, for example, may send that first measurement report as soon as possible after a short delay. The first measurement report, therefore, may not have a high or adequate accuracy. The user equipment may then send one or more additional measurement reports with gradually improving accuracy. The one or more additional measurement reports may be transmitted periodically, for example every 80 ms. Each of the one or more additional measurement reports may average the previous measurements performed by the user equipment, which may gradually improve the accuracy of the measurement results in report, until the accuracy meets a certain threshold. For example, the threshold may be a given time period of 200 ms measurement period, which means that the user equipment may meet the threshold after reporting the three measurements.

Once the threshold is met, the user equipment may revert back to legacy or traditional measurement reporting. The ability to transition from the early measurement reporting to the legacy or traditional measurement reporting may be referred to as multi-level reporting. In other words, the user equipment may revert to a traditional measurement report once the early measurement report meets the early measurement reporting threshold, or after a measurement period has lapsed or terminated. The network entity, such as the eNB, may configure, in certain embodiments, a given threshold for a minimum signal strength of a measured cell before the measurements of the cell may be reported.

In certain embodiments, measurements may be performed, for example, on carriers which the network has indicated and the UE is able to use for CA and/or DC, including EN-DC. In embodiments involving EN-DC, where the NR carriers are in higher carrier frequencies, the UE would most likely have a separate radio frequency chain for NR. In such embodiments, the NR measurements may be performed in parallel with the connection setup, thereby significantly reducing the setup time for EN-DC and increasing the NR usage time.

In certain other embodiments, when indicating the measurements via an RRC connection release, for example, additional information may be given to the UE, compared to when broadcast indications are used to indicate measurements. For example, the UE may be asked to store the current CA/DC/EN-DC configuration and primarily measure those cells, with the expectation that UE would likely return to connected state while still operating under the same cells. The UE in such an embodiment may be termed a semi-stationary UE.

In certain embodiments, the network entity, such as an eNB, may decide at which accuracy, signal strength, and/or quality level is the network may be ready to configure the SCell, configure DC and/or initiate inter-frequency handover. When a cell reported by the UE meets these requirements, the network entity may configure the SCell without waiting for further measurement reports. This may result in substantially faster setup of the SCell compared to waiting for the UE's first measurement report after a full measurement period has terminated, even if the signal strength or quality may be far above the desired level.

In certain embodiments, the network configures another cell, such as a secondary cell, a primary secondary cell, WLAN AP, or a small cell, when the signal measurement of the secondary cell is larger than a threshold. The signal measurement, for example, may be a reference signal received power (RSRP) or a reference signal received quality (RSRQ). While some of the embodiments described below utilize the RSRP, other embodiments may utilize any other type of signal. The threshold may be defined as an absolute value or a relative value, given, for example, in a decibel scale. In some embodiments, the user equipment may be configured to periodically report measurement result after 40 ms. The user equipment may report the first RSRP that the user equipment measured on the another cells, such secondary cells, primary secondary cells, and small cells. Depending on the accuracy of the first RSRP, the network may configure the another cell immediately. Otherwise, if RSRP is closer to a decision threshold, the network may decide to wait until further measurements are performed, and the measurements needed to configure the another cell, such as a secondary cell or a small cell, become more accurate. There may be a delta that could indicate if the secondary cell is configured or not. For example, if the RSRP of the small cell is, for example, 3 dB better than a configuration threshold, then the network would need one more measurement based on which it may decide whether to configure the small cell.

The above embodiments, as well as the embodiment shown in Figure 2, may allow the eNB or the network to get cell measurement information faster after the user equipment performs or initiates the measurements. Faster may mean that the early measurement report is transmitted before the termination of a measurement period. For example, the measurement period may have a length of 480 ms. The early measurement report may include results based on a shorter measurement period and may be less accurate, but the network may be made aware of the possible reduced accuracy of the measurement report when and if the measurement report includes an indication of measurement accuracy.

The early measurement reporting may result in some additional reporting overhead. In some embodiments, when the network does not have enough uplink capacity, the network may choose not to active or enable the additional early measurement reporting by the user equipment.

In certain embodiments, the early measurement reporting may be transmitted via either a common control channel (CCCH) or a dedicated control channel (DCCH). CCCH may be a non-encrypted channel with a signal radio bearer (SRB) represented as SRB0. DCCH, on the other hand, may be an integrity protected and encrypted channel, with SRB1/2. In some embodiments, the early measurement reporting may use existing measurement reporting structure, for example an RRC_Connected format, or any other measurement reporting format.

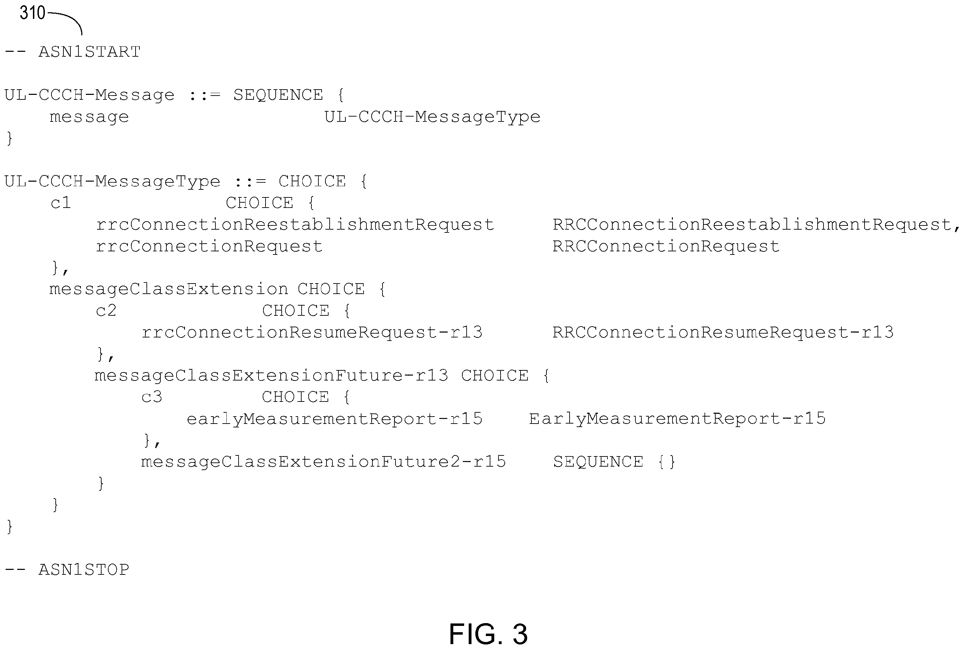

Figure 3 illustrates an example of a measurement report according to certain embodiments. In particular, Figure 3 illustrates measurement reporting using an uplink CCCH message with no encryption. As can be seen in Figure 3, the abstract syntax notation one (ASN.1) of measurement report 310 is similar to a CCCH uplink message, except that it includes a specific allowance for an early measurement report, listed as earlyMeasurementReport-r15.

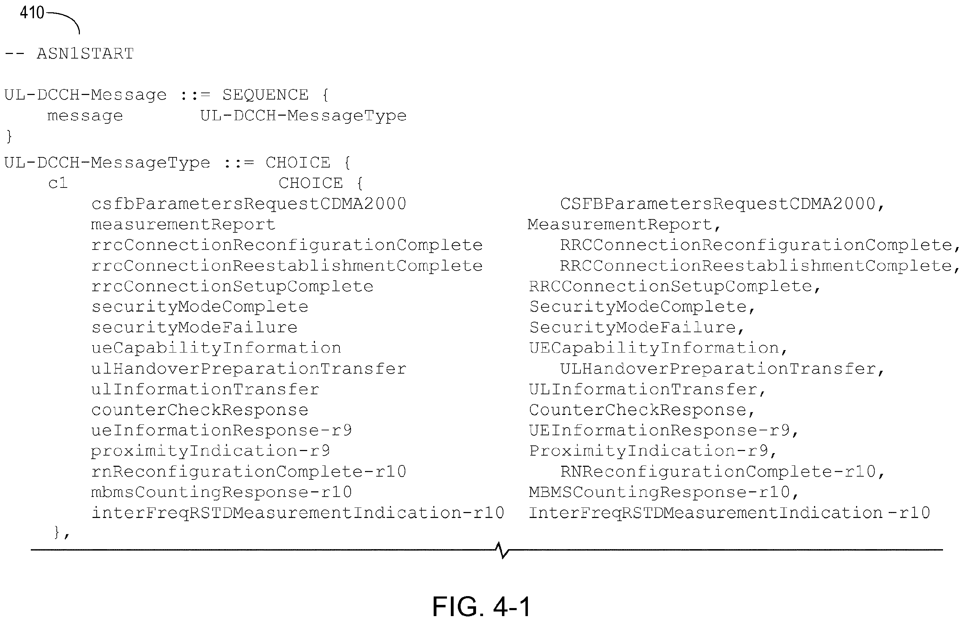

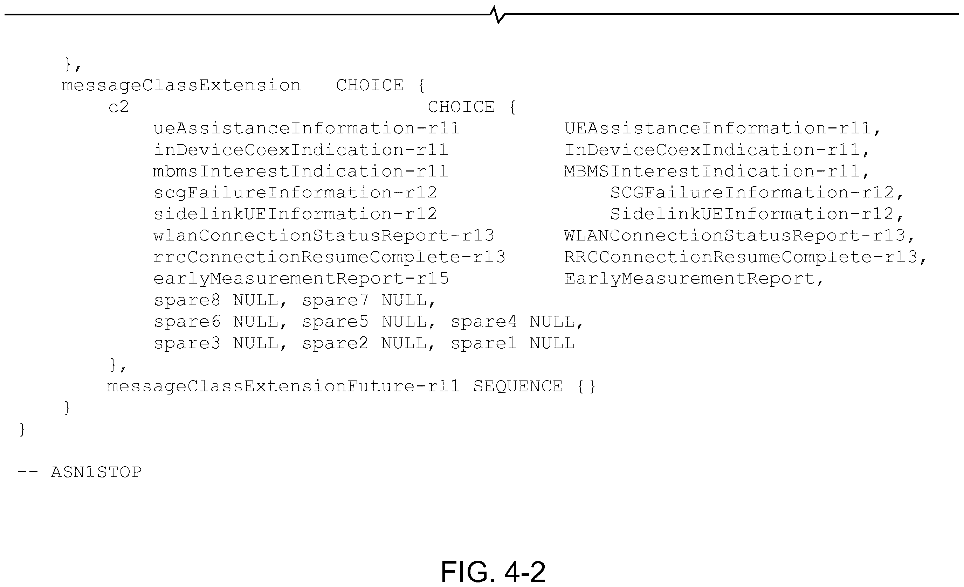

Figure 4 illustrates an example of a measurement report according to certain embodiments. In particular, Figure 4 illustrates measurement reporting using an uplink DCCH message with normal encryption. As can be seen in Figure 4, the ASN.1 of measurement report 410 is similar to a DCCH uplink message, but includes a specific allowance for an early measurement report, listed as earlyMeasurementReport-r15. The uplink DCCH message class may be the set of RRC messages that may be sent from the user equipment to the E-UTRAN or from a relay node to the E-UTRAN on the uplink DCCH logic channel.

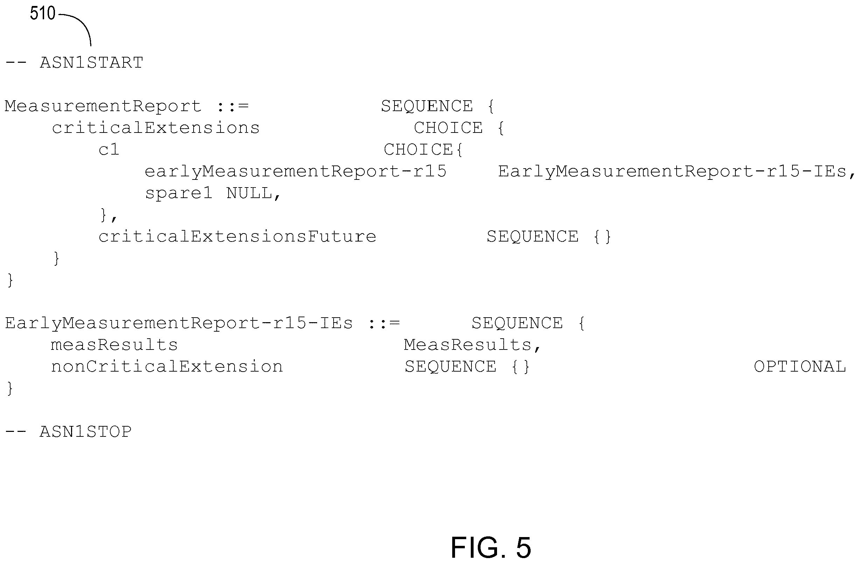

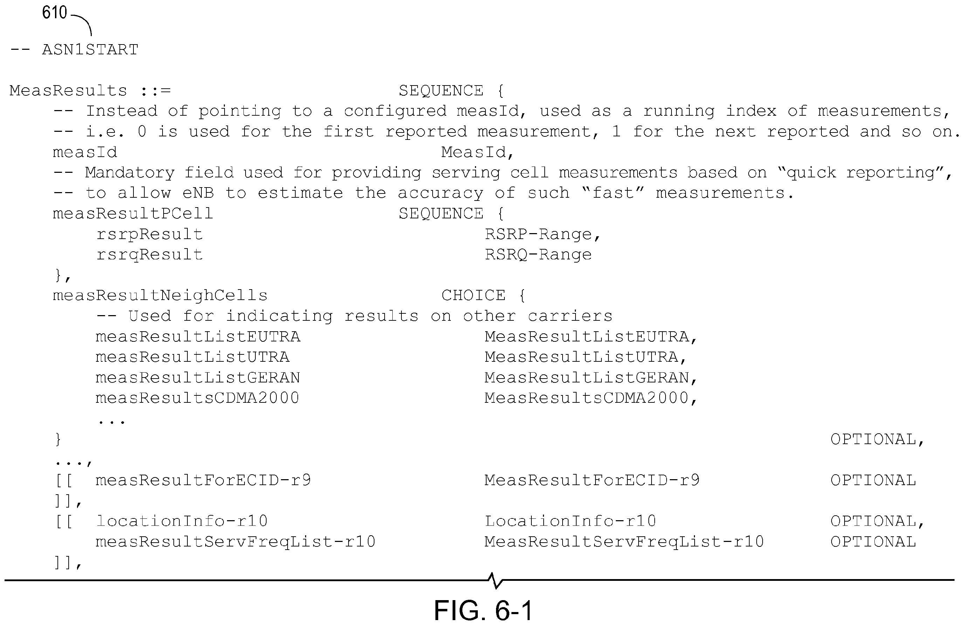

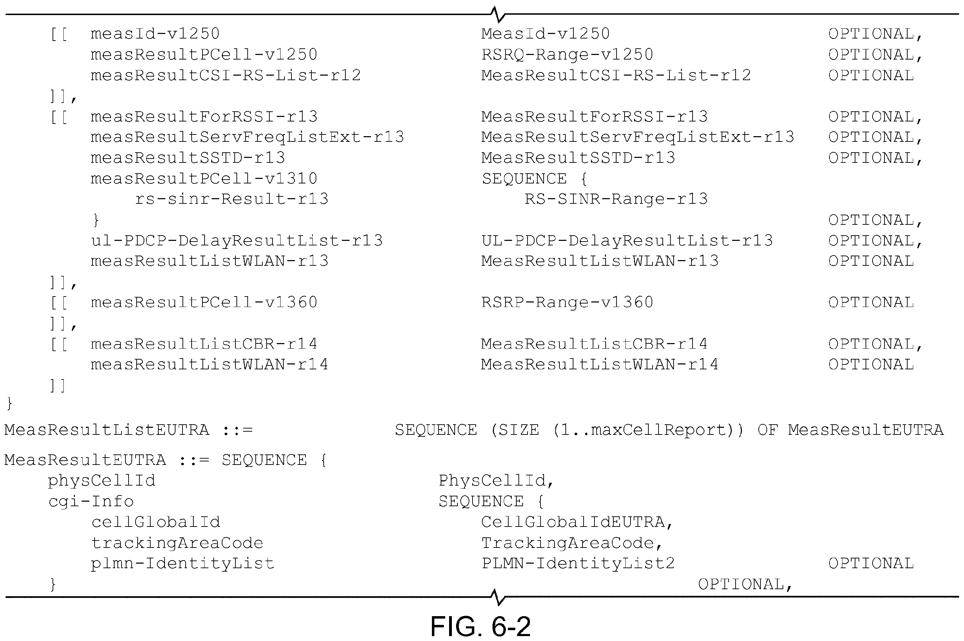

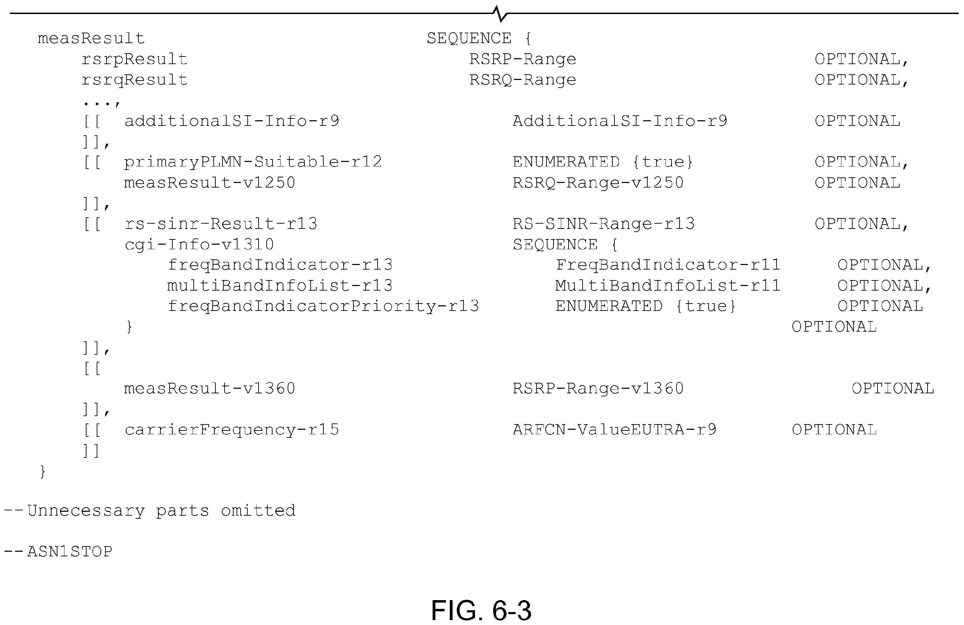

In certain embodiments, as shown in Figures 5 and 6, the early measurement reporting may use existing message structures. For example, EarltMeasurementReport-r15, which are also shown in Figures 3 and 4, may either use SRB0 or SRB1. The logical channel of the early measurement report may be either CCCH or DCCH, and the measurement report may be an uplink message transmitted from the user equipment to the network. The radio link control service access point (RLC-SAP), may in certain embodiments, operate in an acknowledged mode (AM).

Figure 5 illustrates an example of a measurement report according to certain embodiments. In particular, Figure 5 illustrates an early measurement report message that is used to indicate early measurement results. Early measurement report 510 may be a measurement report that is transmitted before the termination of a measurement period. The ASN.1 of early measurement report 510 specifically includes an allowance for EarlyMeasurementReport-r15-IEs and for measResults, which are the measurement results included in the early measurement report.

Figure 6 illustrates an example of measurement results according to certain embodiments. In particular, Figure 6 illustrates an example of the measurement results information element 610 included, for example, in measurement report 510. The measurement results may include measurement results for intra-frequency, inter-frequency, and/or inter-RAT mobility. As can be seen in Figure 6, the measurement results information element 610 may include a measurement identification, referred to as measID. The identification may be used to estimate the accuracy of the measurements included therein. For example, the measID may be a running index of measurements, with 0 being used for the first reported measurement, and 1 being used for the next reported measurements. In other embodiments, the measurement results information element 610 may include measurement results of the primary cell, which may be RSRP results or reference signal received quality (RSRQ), as well as the measurement results of neighboring cells, another cells, or secondary cells in the same or different carriers.

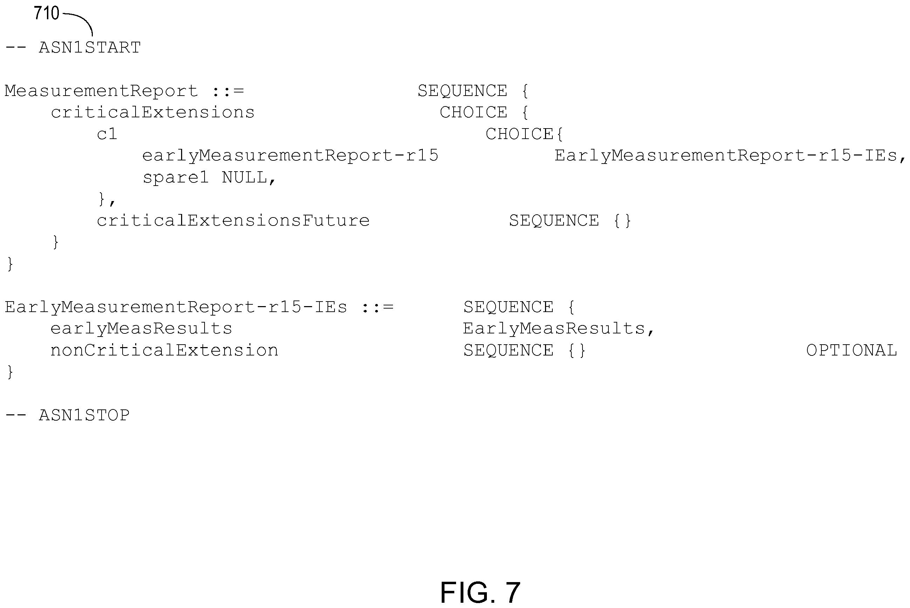

Figure 7 illustrates an example of a measurement report according to certain embodiments. In particular, Figure 7 illustrates an early measurement report message 710 that is used to indicate early measurement results, not using a traditional measurement format for the results. Early measurement report 710 may be a measurement report that is transmitted before the termination of a measurement period. The ASN.1 of early measurement report 710 specifically includes an allowance for EarlyMeasurementReport-r15-IEs and for earlyMeasResults, which are the early measurement results included in the early measurement report. Measurement report 510 in Figure 5 uses traditional or legacy MeasResults in Figure 5, while measurement report 710 in Figure 7 utilizes a new measurement format, referred to as earlyMeasResults.

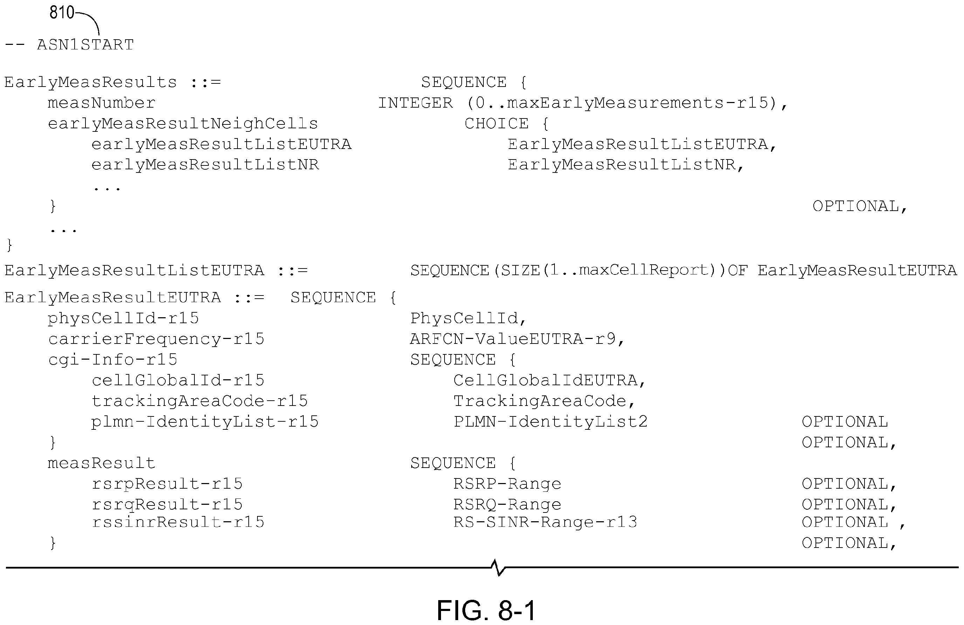

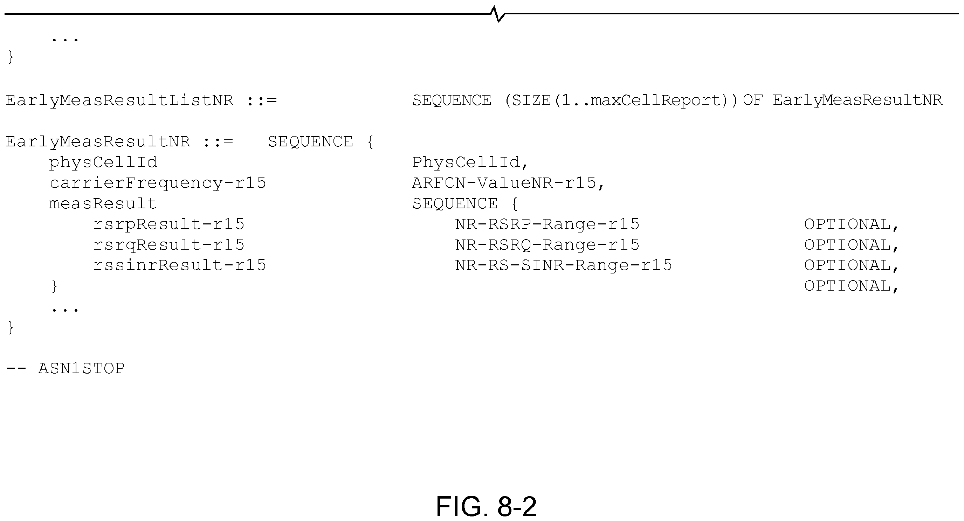

Figure 8 illustrates an example of measurement results according to certain embodiments. In particular, Figure 8 illustrates an example of the early measurement results information element 810 included, for example, in measurement report 710. The measurement results may include those measurement results for intra-frequency, inter-frequency, and/or inter-RAT mobility reported before setup of the RRC connection measurement configuration. As can be seen in Figure 8, measurement reporting information element 810 may include a measurement number, and early measurement results of neighboring, another, or secondary cells, which may either be E-UTRAN cells or NR cells. Other information may also be included in early measurement results information 810 to help identify the cell upon which the measurements were performed. For example, the cell may be identified by a physical cell identification, a carrier frequency, a cell global identifier, a tracking area code, and/or a public land mobile network identification. The measurements may take the form of RSRP and/or RSRQ, for example.

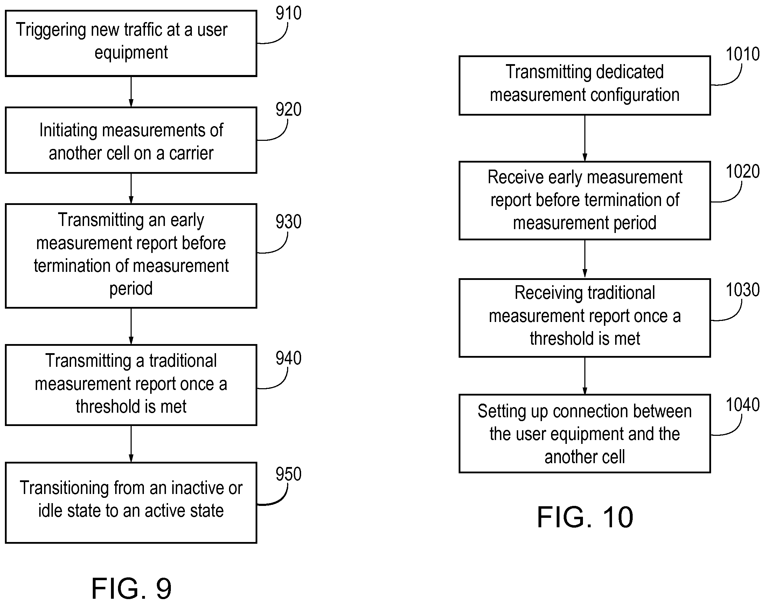

Figure 9 illustrates an example of a flow diagram according to certain embodiments. In particular, Figure 9 illustrates a method performed by a user equipment, such as UE 201 in Figure 2. In step 910, new traffic may be triggered at the user equipment. The user equipment may be in an idle state or an inactive state. The new traffic, for example, may be traffic arriving at a buffer of the user equipment for a mobile originating call or a paging indication for a mobile terminating call.

In step 920, the user equipment may perform measurements of another cell on a carrier after the triggering of the new traffic. The another cell may be at least one of a secondary cell, a primary secondary cell, a WLAN AP, or a small cell. The carrier may be used by the user equipment for carrier aggregation or dual connectivity once the user equipment is in an active state. In certain embodiments, the user equipment may receive an indication of the carrier from the network entity. The indication, for example, may be included in a system information block, a paging indication, or a message received at the user equipment from the network entity.

In step 930, the user equipment may transmit an early measurement report comprising the measurements from the user equipment to the network entity. The early measurement report may be transmitted before termination of a measurement period. A length of the measurement period may be transmitted to the user equipment from the network entity. In other words, the network entity may determine the length of the measurement period, and report a value of the length of the measurement period to the user equipment. In certain embodiments, the early measurement report may be at least one of an inter-frequency early measurement report or an inter-radio access technology early measurement report. In other embodiments, the early measurement report may be transmitted from the user equipment to the network entity before the user equipment receives any dedicated measurement configuration from the network entity. The user equipment may also, in some embodiments, add an indication of a measurement accuracy in the early measurement report.

In certain embodiments, the user equipment may transmit one or more additional early measurement reports periodically until the termination of the measurement period. The user equipment may transmit the early measurement report or the one or more additional early measurement reports to the network entity until a threshold is met. The threshold may be adjusted based on a number of the measurements performed by the user equipment. In some embodiments, the method may include transmitting an indication from the user equipment to the network entity that the threshold has not been met.

In step 940, the user equipment may transmit to the network entity a traditional measurement report once the early measurement report or the one or more additional early measurement reports meet the threshold. In other words, the user equipment may revert to the traditional measurement reporting, and may stop transmitting the early measurement reports once the threshold is met. This may be referred to as multi-level measurement reporting.

In step 950, the user equipment may transition from an active state or an idle state to an active state. Once the user equipment is active, the user equipment may transmit and/or receive traffic in a CA or DC mode from the secondary cell and the network entity. The secondary cell connection may have been set up by the network entity using the early measurement reports and/or the traditional measurement reports provided to the network entity by the user equipment.

Figure 10 illustrates an example of a flow diagram according to certain embodiments. In particular, Figure 10 illustrates a method performed by a network entity, such as eNB 202 in Figure 2. The network entity shown in Figure 10 may communicate with the user equipment shown in Figure 9. In step 1010, the network entity may transmit a dedicated measurement configuration from the network entity to the user equipment. The measurement report may be received at the network entity before the transmitting of the dedicated measurement. The measurement configuration, for example, may include at least one of a measurement period, a threshold, and/or a carrier.

In step 1020, the network entity may receive at a network entity an early measurement report from a user equipment. The early measurement report, in certain embodiments, may be at least one of an inter-frequency early measurement report or an inter-radio access technology early measurement report. In some embodiments, the early measurement report may be received at the network entity via a common control channel or a dedicated control channel. The measurement report may comprise measurements of another cell by the user equipment on a carrier. The another cell may be at least one of a secondary cell, a primary secondary cell, a WLAN AP, or a small cell. The measurement report may be received at the network entity before termination of a measurement period.

In certain embodiments, the early measurement report may be at least one of an inter-frequency early measurement report or an inter-radio access technology early measurement report. In step 1030, the network entity may receive one or more additional early measurement reports periodically until the termination of the measurement period. The network entity may transmit an indication of the measurement period to the user equipment. The network entity may receive the early measurement report and the one or more additional early measurement reports until a threshold is met. In certain embodiments, the network entity may receive an indication from the user equipment that the threshold has not been met. In step 1040, the network entity may set up a connection between the user equipment and the another cell based on at least one of the early measurement report or the traditional measurement report.

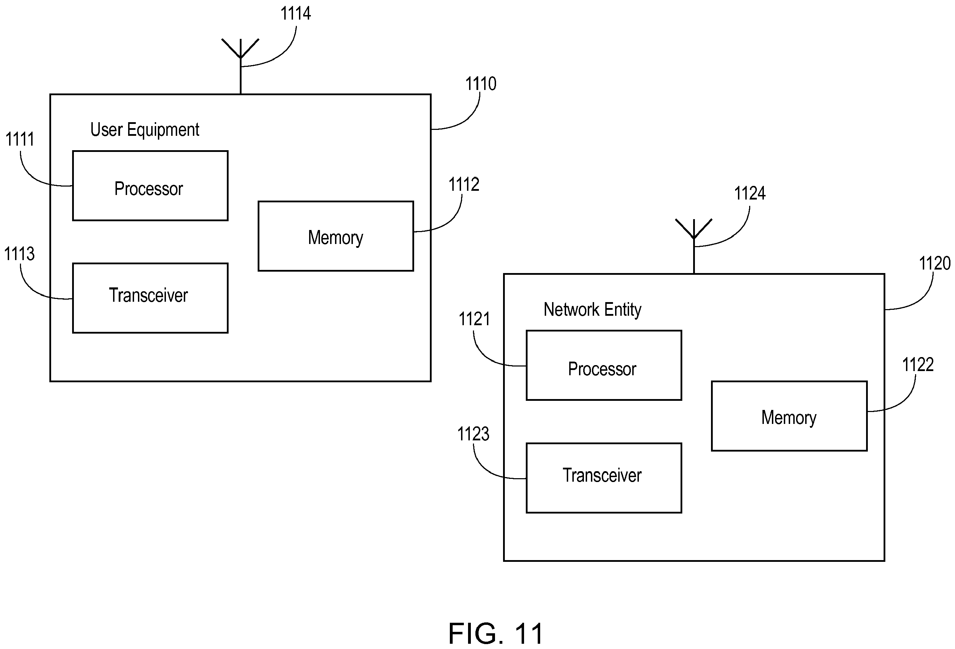

Figure 11 illustrates a system according to certain embodiments. It should be understood that each signal or block in Figures 1-10 may be implemented by various means or their combinations, such as hardware, software, firmware, one or more processors and/or circuitry. In one embodiment, a system may include several devices, such as, for example, network entity 1120 or user equipment (UE) 1110. The system may include more than one UE 1110 and more than one network entity 1120. Network entity 1120, may be a network node, a base station, an access point, an access node, an eNB, a gNB, a server, a host, or any other network core entity that may communicate with the UE.

Each of these devices may include at least one processor or control unit or module, respectively indicated as 1111 and 1121. At least one memory may be transmitted in each device, and indicated as 1112 and 1122, respectively. The memory may include computer program instructions or computer code contained therein. One or more transceiver 1113 and 1123 may be transmitted, and each device may also include an antenna, respectively illustrated as 1114 and 1124. Although only one antenna each is shown, many antennas and multiple antenna elements may be transmitted to each of the devices. Other configurations of these devices, for example, may be transmitted. For example, network entity 1120 and UE 1110 may be additionally configured for wired communication, in addition to wireless communication, and in such a case antennas 1114 and 1124 may illustrate any form of communication hardware, without being limited to merely an antenna.

Transceivers 1113 and 1123 may each, independently, be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example. The operations and functionalities may be performed in different entities, such as nodes, hosts or servers, in a flexible manner. In other words, division of labor may vary case by case. One possible use is to make a network entity deliver local content. One or more functionalities may also be implemented as virtual application(s) in software that can run on a server.

A user device or a UE 1110, may be a mobile station (MS) such as a mobile phone or smart phone or multimedia device, a computer, such as a tablet, transmitted with wireless communication capabilities, personal data or digital assistant (PDA) transmitted with wireless communication capabilities, portable media player, digital camera, pocket video camera, navigation unit transmitted with wireless communication capabilities or any combinations thereof. In other embodiments, the user equipment may be replaced with a machine communication device that does not require any human interaction.

In some embodiments, an apparatus, such as a user equipment or a network entity, may include means for carrying out embodiments described above in relation to Figures 1-10. In certain embodiments, at least one memory including computer program code can be configured to, with the at least one processor, cause the apparatus at least to perform any of the processes described herein.

Processors 1111 and 1121 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors.

For firmware or software, the implementation may include modules or unit of at least one chip set (for example, procedures, functions, and so on). Memories 1112 and 1122 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and which may be processed by the processors can be any suitable form of computer program code, for example, a compiled or interpreted computer program written in any suitable programming language. The memory or data storage entity is typically internal but may also be external or a combination thereof, such as in the case when additional memory capacity is obtained from a service provider. The memory may be fixed or removable.

The memory and the computer program instructions may be configured, with the processor for the particular device, to cause a hardware apparatus such as network entity 1120 or UE 1110, to perform any of the processes described above (see, for example, Figures 1-10). Therefore, in certain embodiments, a non-transitory computer-readable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, etc., or a low-level programming language, such as a machine language, or assembler. Alternatively, certain embodiments may be performed entirely in hardware.

The above embodiments may provide for significant improvements to the functioning of a network, the functioning of the network entities within the network, and/or the user equipment communicating with the network. For example, the above embodiments may allow the network entity to get early measurement reports from the user equipment. The early measurement reports may be less accurate, but the network may be made aware of the accuracy of the report and may use the measurement report accordingly. By transmitting the early measurement reporting, and then reverting to traditional measurement reporting, the user equipment may decrease its power consumption, while also providing measurement reports to the network. In addition, by relying on early measurement reporting, the network may be able to complete a CA or DC connection setup with the user equipment and a small cell quickly, which allows for the early activation of the user equipment. This helps to significantly reduce the power consumption of the user equipment in the inactive or idle state.

The features, structures, or characteristics of certain embodiments described throughout this specification may be combined in any suitable manner in one or more embodiments. For example, the usage of the phrases "certain embodiments," "some embodiments," "other embodiments," or other similar language, throughout this specification refers to the fact that a particular feature, structure, or characteristic described in connection with the embodiment may be included in at least one embodiment of the present invention. Thus, appearance of the phrases "in certain embodiments," "in some embodiments," "in other embodiments," or other similar language, throughout this specification does not necessarily refer to the same group of embodiments, and the described features, structures, or characteristics may be combined in any suitable manner in one or more embodiments.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. Although the above embodiments refer to 3GPP LTE technology, certain other embodiments may be applied to NR or 5G technology, such as NSA and EN-DC, as well as other present or future 3GPP technology, such as IoT technology, Long Term Evolution (LTE), LTE-advanced, and/or fourth generation (4G) technology.

### Partial Glossary

- CA: Carrier Aggregation
- CCCH: Common Control Channel
- DC: Dual Connectivity
- DCCH: Dedicated Control Channel
- DL: Downlink
- DRB: Data Radio Bearer
- E-UTRAN: Evolved Universal Terrestrial Radio Access Network
- eNB: evolved Node-B
- EN-DC: E-UTRAN NR Dual Connectivity
- LTE: Long Term Evolution
- NR: New Radio
- MO: Mobile Originating
- MR-DC: Multi-RAT Dual Connectivity
- MT: Mobile Terminating
- NSA: Non Stand Alone
- NR: New Radio
- NW: Network
- PCell: Primary Cell
- RAT: Radio Access Technology
- RRC: Radio Resource Control
- RSRP: Reference Signal Received Power
- RSRQ: Reference Signal Received Quality
- RS-SINR: Reference Signal SINR
- SCell: Secondary Cell
- SIB: System Information Block
- SINR: Signal to Interference plus Noise Ratio
- SRB: Signalling Radio Bearer
- UE: User Equipment

According to a first embodiment, a method may include triggering new traffic at a user equipment, wherein the user equipment is in an idle state or an inactive state. The method may also include performing measurements at the user equipment to find another cell on a carrier after the triggering of the new traffic. In addition, the method may include transmitting an early measurement report comprising the measurements from the user equipment to the network entity. The early measurement report may be transmitted before termination of a measurement period.

In a variant, the another cell may be at least one of a secondary cell, a primary secondary cell, a wireless local area network access point, or a small cell.

In an additional variant, the early measurement report may be transmitted from the user equipment to the network entity before the user equipment received any dedicated measurement configuration from the network entity.

In a further variant, the early measurement report may be at least one of an inter-frequency early measurement report or an inter-radio access technology early measurement report.

In another variant, the new traffic may be traffic arriving at a buffer of the user equipment for a mobile originating call or a paging indication for a mobile terminating call.

In another variant, the method may include receiving an indication of the carrier at the user equipment. The indication may be included in a system information block, a paging indication, or a message received at the user equipment from the network entity.

In a further variant, the measurements initiated at the user equipment may be directed to a strongest cell in the carrier.

In a variant, the method may include transmitting one or more additional early measurement reports periodically until the termination of the measurement period.

In another variant, a length the measurement period may be transmitted to the user equipment from the network entity.

In an additional variant, the user equipment may transmit the early measurement report or the one or more additional early measurement reports to the network entity until a threshold is met.

In a variant, the method may further include transmitting from the user equipment to the network entity a traditional measurement report once the early measurement report or the one or more additional early measurement reports meet the threshold.

In some variant, the threshold may be adjusted based on a number of the measurements performed by the user equipment.

In a variant, the method may include transmitting an indication from the user equipment to the network entity that the threshold has not been met.

In another variant, the carrier may be used by the user equipment for carrier aggregation or dual connectivity once the user equipment is in an active state.

In an additional variant, the method may include transitioning from the idle state or the inactive state to an active state of the user equipment after the threshold is met.

In a further variant, the method may include transmitting or receiving data from the user equipment to at least one of the another cell or the network entity after transitioning to the active state using dual connectivity or carrier aggregation.

In a variant, the early measurement report may be transmitted to the network entity via a common control channel or a dedicated control channel.

In another variant, the method may include adding an indication of a measurement accuracy in the early measurement report.

According to a second embodiment, a method may include receiving at a network entity an early measurement report from a user equipment. The measurement report may comprise measurements of a another cell by the user equipment on a carrier. The measurement report may be received at the network entity before termination of a measurement period.

In a variant, the another cell may be at least one of a secondary cell, a primary secondary cell, a wireless local area network access point, or a small cell.

In an additional variant, the method may comprise transmitting a dedicated measurement configuration from the network entity to the user equipment. The measurement report may be received at the network entity before the transmitting of the dedicated measurement.

In a further variant, the early measurement report may be at least one of an inter-frequency early measurement report or an inter-radio access technology early measurement report.

In another variant, the method may include transmitting an indication of the carrier at the user equipment. The indication may be transmitted as part of a system information block, a paging indication, or a message transmitted from the network entity to the user equipment.

In a variant, the method may include receiving one or more additional early measurement reports periodically until the termination of the measurement period.

In another variant, transmitting an indication of a length of the measurement period from the network entity to the user equipment.

In an additional variant, the network entity may receive the early measurement report and the one or more additional early measurement reports until a threshold is met.

In a variant, the method may further include receiving at the network entity a traditional measurement report once the early measurement report or the one or more additional measurement reports meet the threshold.

In a variant, the method may include receiving an indication from the user equipment at the network entity that the threshold has not been met.

In a variant, the early measurement report may be received at the network entity via a common control channel or a dedicated control channel.

In another variant, the method may include receiving an indication of a measurement accuracy in the early measurement report.

In a variant, the method include setting up a connection between the user equipment and the another cell based on at least one of the early measurement report or the traditional measurement report.

According to a third and fourth embodiment, an apparatus can include at least one processor and at least one memory and computer program code. The at least one memory and the computer program code can be configured to, with the at least one processor, cause the apparatus at least to perform a method according to the first embodiment and the second embodiment, and any of its variants.

According a fifth and sixth embodiment, an apparatus can include means for performing the method according to the first embodiment and the second embodiment, and any of its variants.

According to a seventh and an eighth embodiment, a computer program product may encode instructions for performing a process including a method according to the first embodiment and the second embodiment, and any of its variants.

According to a ninth and a tenth embodiment, a non-transitory computer-readable medium may encode instructions that, when executed in hardware, perform a process including a method according to the first embodiment and the second embodiment, and any of its variants.

According to an eleventh and a twelve embodiment, a computer program code may include instructions for performing a method according to the first embodiment and the second embodiment, and any of its variants.

## Claims

1. A method comprising:
triggering new traffic at a user equipment, wherein the user equipment is in an idle state or an inactive state;
performing measurements at the user equipment to find another cell on a carrier after the triggering of the new traffic; and
transmitting an early measurement report comprising the measurements from the user equipment to a network entity during or after a connection setup procedure.

2. The method as in claim 1, wherein the another cell is at least one of a secondary cell, a primary secondary cell, a wireless local area network access point, and a small cell.

3. The method as in claim 1 or 2, wherein the early measurement report is transmitted from the user equipment to the network entity before the user equipment receives any dedicated measurement configuration from the network entity.

4. An apparatus comprising:
triggering means for triggering new traffic at a user equipment, wherein the user equipment is in an idle state or an inactive state;
performing means for performing measurements at the user equipment to find another cell on a carrier after the triggering of the new traffic; and
transmitting means for transmitting an early measurement report comprising the measurements from the user equipment to a network entity during or after a connection setup procedure.

5. The apparatus as in claim 4, wherein the another cell is at least one of a secondary cell, a primary secondary cell, a wireless local area network access point, and a small cell.

6. The apparatus as in claim 4 or 5, wherein the early measurement report is transmitted from the user equipment to the network entity before the user equipment receives any dedicated measurement configuration from the network entity.

7. The apparatus as in any one of claims 4-6, wherein the early measurement report is transmitted before termination of a measurement period.

8. The apparatus as in any one of claims 4-6, wherein the early measurement report comprises results based on a shorter measurement period.

9. The apparatus as in any one of claims 4-8 further comprising:
receiving means for receiving an indication of the carrier at the user equipment wherein the indication is included in at least one of a system information block, a paging indication, and a message received at the user equipment from the network entity.

10. The apparatus as in any one of claims 4-9, wherein the carrier is used by the user equipment for carrier aggregation or dual connectivity once the user equipment is in an active state.

11. An apparatus comprising:
receiving means for receiving, at a network entity, an early measurement report from a user equipment wherein the early measurement report comprises measurements of another cell by the user equipment on a carrier and the early measurement report is received during or after a connection setup procedure.

12. The apparatus as in claim 11, wherein the another cell is at least one of a secondary cell, a primary secondary cell, a wireless local area network access point, and a small cell.

13. The apparatus as in claim 11 or 12, further comprising:
transmitting means for transmitting a dedicated measurement configuration from the network entity to the user equipment wherein the early measurement report is received before the transmission of the dedicated measurement configuration.

14. A method comprising:
receiving, at a network entity, an early measurement report from a user equipment wherein the early measurement report comprises measurements of another cell by the user equipment on a carrier and the early measurement report is received during or after a connection setup procedure.

15. A non-transitory computer readable medium comprising program instructions for causing an apparatus to perform the method according to any one of claims 1 to 3 or 14.
